# EUROPÄISCHE PATENTSCHRIFT

(11) **EP 2 221 702 B1**
(45) Veröffentlichungstag und Bekanntmachung des Hinweises auf die Patenterteilung: **06.01.2016**
(21) Anmeldenummer: 09170393.4
(22) Anmeldetag: 16.09.2009
(51) Int. Cl.: A01B 69/00, A01B 79/00

(54) **Verfahren zur Erzeugung von Referenzfahrspuren für landwirtschaftliche Fahrzeuge**
Method for creating reference lanes for agricultural vehicles
Procédé de production de bandes de circulation de référence pour des véhicules agricoles

(30) Priorität: 10.02.2009 DE 102009009818
(43) Veröffentlichungstag der Anmeldung: 25.08.2010
(73) Patentinhaber: CLAAS Selbstfahrende Erntemaschinen GmbH, 33428 Harsewinkel (DE)
(72) Erfinder: Diekhans, Norbert, 33335, Gütersloh (DE); Meyer zu Helligen, Lars Peter, 32139, Spenge (DE); Nienaber, Gerhard, 59320, Ennigerloh (DE)

(56) Entgegenhaltungen:
- EP-A2- 1 847 897
- DE-A1-102006 002 567
- US-A- 5 264 709
- US-A1- 2003 187 560
- US-A1- 2007 233 374
- US-B1- 6 490 539
- US-B1- 6 687 616

## Beschreibung

Die Erfindung betrifft ein Verfahren zur Erzeugung wenigstens einer Referenzfahrspur für die automatische Routenplanung eines landwirtschaftlichen Fahrzeugs.

Automatische Routenplanungssysteme und -verfahren werden in der Landwirtschaft zunehmend eingesetzt, um die Bodenbearbeitung zu rationalisieren, sei es, indem eine möglichst kurze und schnelle Route für die Bearbeitung einer landwirtschaftlichen Fläche ermittelt wird, oder um Betriebsparameter von Fahrzeugen wie etwa Tankfüllstände sowie Standorte der Fahrzeuge zu verschiedenen Zeiten während eines Arbeitseinsatzes vorherzusagen und die Effektivität der Zusammenarbeit der Fahrzeuge untereinander zu optimieren.

Ein Verfahren nach dem Oberbegriff des Anspruchs 1 ist aus DE 10 2006 002 567 A1 bekannt. Bei diesem Verfahren wird eine zu bearbeitende landwirtschaftliche Fläche mit einem Fahrzeug abgefahren, und die dabei zurückgelegte Route wird aufgezeichnet. Die aufgezeichnete Route wird auf einem Bildschirm angezeigt, und einem Benutzer wird Gelegenheit gegeben, auf der gefahrenen Route Anfangs- und Endpunkte einer Referenzfahrspur auszuwählen. Die Referenzfahrspur kann dann herangezogen werden, um die Anordnung von anderen, im Laufe der weiteren Bearbeitung der Fläche zu fahrenden Fahrspuren automatisch festzulegen. Dies entbindet den Fahrer des Fahrzeugs von der Aufgabe, selber eine wirtschaftlich fahrbare Route für die Bearbeitung der Fläche zu ermitteln, und es eröffnet die Möglichkeit, die Flächenbearbeitung wenigstens teilweise zu automatisieren, indem das Fahrzeug durch einen Lenkautomaten auf der geplanten Route entlang geführt wird.

Alternativ zur Auswahl von Anfangs- und Endpunkten der Referenzfahrspur auf einer angezeigten Grafik bietet das bekannte Verfahren dem Fahrer des Fahrzeugs die Möglichkeit, Anfangs- und Endpunkt einer Referenzfahrspur zu spezifizieren, indem er ein Start- bzw. Stoppsignal in das Routenplanungssystem eingibt, wenn er beginnt, eine Referenzfahrspur zu fahren bzw. damit fertig ist.

Beide Ansätze sind noch nicht vollauf befriedigend. Wenn die bislang gefahrene Route auf einem Touchscreen-Monitor vollständig dargestellt wird, ist es schwierig, insbesondere im Fall einer großen zu bearbeitenden Fläche, Anfangs- und Endpunkt einer Referenzfahrspur mit der nötigen Genauigkeit festzulegen. Zwar wäre es denkbar, jeweils Teile der Route in einem vergrößerten Maßstab darzustellen, doch es ist schwierig, einen Anfangs- oder Endpunkt einer Referenzfahrspur sinnvoll festzulegen, wenn der jeweils andere Punkt nicht gleichzeitig sichtbar ist. Insbesondere wenn die bereits gefahrene Route mehrere parallele, auch in einer vergrößerten Darstellung gleichzeitig sichtbare Wegstücke umfasst, ist das Auswählen von Anfangs- und Endpunkten der Referenzfahrspur sehr fehlerträchtig. Wenn der Fahrer Anfangs- und Endpunkte der Referenzfahrspur jeweils festlegen soll, während er diese überfährt, ist die Wahrscheinlichkeit hoch, dass er vergisst, rechtzeitig das Start- bzw. Stoppsignal zu erzeugen, vor allem, wenn er in dem Bewusstsein, soeben eine Referenzfahrspur zu fahren, seine gesamte Aufmerksamkeit darauf richtet, das Fahrzeug möglichst exakt entlang dem beabsichtigten Verlauf der Referenzfahrspur zu lenken.

Aufgabe der vorliegenden Erfindung ist daher, ein Verfahren zur Gewinnung einer Referenzfahrspur zu schaffen, das einem Benutzer die Aufgabe, aus einer gefahrenen Ausgangsroute eine Referenzfahrspur auszuwählen, vollständig abnimmt, oder ihn zumindest dabei unterstützt.

Die Aufgabe wird gelöst, indem bei einem Verfahren zur Gewinnung einer Referenzfahrspur für die automatische Routenplanung eines landwirtschaftlichen Fahrzeugs mit den Schritten:
a) Abfahren einer Ausgangsroute auf einer zu bearbeitenden landwirtschaftlichen Fläche;
b) Aufzeichnen der Ausgangsroute in einer Datenverarbeitungseinrichtung;
c) Auswählen wenigstens eines Abschnitts der aufgezeichneten Ausgangsroute als eine Referenzfahrspur
die Ausgangsroute auf ihrer gesamten Länge auf Richtungsänderungen untersucht wird und in Schritt c) ein Abschnitt nur dann als Referenzfahrspur ausgewählt wird, wenn auf der gesamten Länge des Abschnitts keine einen Grenzwert überschreitende Richtungsänderung gefunden wird. Auf diese Weise werden Teile der Ausgangsroute, die zum Beispiel Wendemanöver zwischen zwei parallel nebeneinander herlaufenden Fahrspuren, an Ecken der landwirtschaftlichen Fläche gefahrene Kurven, Manöver zum Umfahren von Hindernissen oder dergleichen umfassen, von der Auswahl als Referenzfahrspur ausgeschlossen.

Die Auswahl einer einzigen Referenzfahrspur unter den auf diese Weise erhaltenen Abschnitten kann zweckmäßigerweise ebenfalls von der Datenverarbeitungseinrichtung vorgenommen werden; hierfür kann insbesondere die Qualität der Abschnitte anhand wenigstens eines Kriteriums bewertet und als Referenzfahrspur der Abschnitt mit der höchsten Qualität ausgewählt werden. So findet die Erzeugung der Referenzfahrspur vom Fahrer unbemerkt statt, und dieser kann seine Aufmerksamkeit andere Aufgaben zuwenden.

Alternativ kann sich die Tätigkeit der Datenverarbeitungseinrichtung auch beschränken auf das Vorauswählen einer oder mehrerer Referenzfahrspuren und das Anbieten dieser vorausgewählten Referenzfahrspuren zur endgültigen Auswahl durch einen Benutzer. Falls nur eine Referenzfahrspur vorausgewählt wird, reduziert sich das Anbieten zur Auswahl auf ein Anbieten zur Bestätigung. Die Entscheidung, ob eine vorausgewählte Referenzfahrspur tatsächlich verwendet wird, obliegt unabhängig von der Zahl der vorausgewählten Referenzfahrspuren dem Benutzer. Für die Vorauswahl können dieselben Kriterien herangezogen werden wie für die oben erwähnte Qualitätsbeurteilung.

Um dem Benutzer die endgültige Auswahl unter den vorausgewählten Referenzfahrspuren zu erleichtern, können ihm diese auf einem Bildschirm angezeigt werden.

Vorzugsweise wird dem Benutzer dabei auch die Möglichkeit angeboten, eine vorausgewählte Referenzfahrspur zu kürzen oder zu verlängern, wenn er die von der Datenverarbeitungseinrichtung festgelegte Länge einer Referenzfahrspur als unzweckmäßig erkennt.

Auf einem hinreichend geraden Stück der Ausgangsroute können immer mehrere miteinander überlappende Abschnitte festgelegt werden, die auf ihrer gesamten Länge frei von den Grenzwert überschreitenden Richtungsänderungen sind. Um die Zahl der Referenzfahrspuren in Grenzen zu halten, sollte jeweils der längste dieser Abschnitte als Referenzfahrspur ausgewählt werden. Dies bedeutet nicht, dass die Datenverarbeitungseinrichtung die kürzeren Abschnitte im Einzelnen überhaupt identifizieren müsste. So ist es beispielsweise denkbar, dass die Datenverarbeitungseinrichtung aus der aufgezeichneten Ausgangsfahrspur alle diejenigen Stücke herausschneidet, deren Richtungsänderung den Grenzwert übersteigt, und die Vorauswahl der Referenzfahrspuren unter den verbleibenden Abschnitten getroffen wird.

Ein Qualitätskriterium, das herangezogen werden kann, um die Zahl möglicher Referenzfahrspuren zu reduzieren ist, die Geschwindigkeit der Arbeitsmaschine beim Abfahren der Ausgangsroute. Wenn diese Geschwindigkeit erfasst wird, ist es z.B. möglich, in Schritt c) nur solche Abschnitte der Ausgangsroute als Referenzfahrspur auszuwählen, auf denen eine Mindestgeschwindigkeit nicht unterschritten wurde. So werden schwierig zu fahrende Routenabschnitte, die eine niedrige Geschwindigkeit erfordern, automatisch von der Auswahl als Referenzfahrspur ausgeschlossen, da die Wahrscheinlichkeit besteht, dass bei Verwendung eines solchen Abschnitts als Referenzfahrspur eine anhand der Referenzfahrspur geplante Route ebenfalls schwierig und dementsprechend langsam zu fahrende Abschnitte enthält.

Ein weiteres Qualitätskriterium ist die Stärke der auf einem Routenabschnitt auftretenden Richtungsänderungen. So kann z.B. die Zahl der vorausgewählten Referenzfahrspuren verringert werden, indem in Schritt c) unter mehreren Abschnitten der Ausgangsroute, die auf ihrer gesamten Länge frei von den Grenzwert überschreitenden Richtungsänderungen sind, einer oder mehrere verworfen werden, die die stärkste Richtungsänderung aufweisen.

Als weiteres Qualitätskriterium kommt die Übereinstimmung der Richtung eines Routenabschnitts mit einer Vorzugsrichtung in Betracht. So kann unter mehreren Abschnitten, die auf ihrer gesamten Länge frei von den Grenzwert überschreitenden Richtungsänderungen sind, eine Vorzugsrichtung ermittelt werden, und ein oder mehrere Abschnitte, deren Richtung am stärksten von der Vorzugsrichtung abweicht, werden von der Auswahl als Referenzfahrspur ausgeschlossen. So wird, wenn die Ausgangsroute bereits mehrere parallel nebeneinander verlaufende Fahrspuren enthält, mit hoher Wahrscheinlichkeit eine von diesen als Referenzfahrspur gewählt. Des weiteren kann, wenn die Ausgangsroute einen Weg des Fahrzeugs rings um die zu bearbeitende Fläche herum umfasst, ein Abschnitt dieses Weges, der an einem Längsrand der Fläche entlang läuft, mit höherer Wahrscheinlichkeit als Referenzfahrspur ausgewählt werden als ein Wegstück entlang eines Querrandes.

Auch die Länge kann als Qualitätskriterium genutzt werden. So kann etwa von mehreren Abschnitten der Ausgangsroute, die auf ihrer gesamten Länge frei von den Grenzwert überschreitenden Richtungsänderungen sind, jeder Abschnitt verworfen werden, dessen Länge eine vorgegebene Mindestlänge unterschreitet. Diese Mindestlänge kann fest vorgegeben sein, oder sie kann proportional zum längsten Abschnitt sein, um so automatisch die Abmessungen der zu bearbeitenden Fläche zu berücksichtigen.

Die Ausgangsroute kann rückwärts gefahrene Abschnitte umfassen, zum Beispiel wenn das Fahrzeug vor einem Hindernis anhält und zurücksetzt, der Fahrer das Hindernis beiseite räumt und weiterfährt. Da solche Abschnitte in einer Referenzfahrspur nicht erwünscht sind, ist es zweckmäßig, dass solche rückwärts gefahrenen Abschnitte bereits in der aufgezeichneten Ausgangsroute ausgeblendet werden.

Um zufällige Einflüsse wie etwa ein Hin- und Herschaukeln des Fahrzeugs auf unebenem Untergrund bei der Festlegung der Referenzfahrspur zu unterdrücken, kann es zweckmäßig sein, einen in Schritt c) ausgewählten Abschnitt zu glätten. Da der Fahrer in der Regel weiß, ob Abweichungen von der geraden Linie auf zufällige Einflüsse zurückgehen oder auf gezieltes Lenken, ist es zweckmäßig, wenn der Schritt des Glättens auf Veranlassung des Fahrers ausgeführt wird.

Vorzugsweise kann das erfindungsgemäße Verfahren in Echtzeit während der Bearbeitung einer landwirtschaftlichen Fläche eingesetzt werden, um, solange die bereits gefahrene Ausgangsroute nur einen Teil der zu bearbeitenden landwirtschaftlichen Fläche abdeckt, eine Referenzfahrspur zu erhalten, die zur Planung einer Route auf dem von der Ausgangsroute nicht abgedeckten Teil der Fläche herangezogen wird.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine von einem landwirtschaftlichen Fahrzeug auf einem Feld gefahrene Ausgangsroute, auf der das erfindungsgemäße Verfahren aufbaut;
- Fig. 2: ein erstes Stadium der Verarbeitung der Ausgangsroute;
- Fig. 3: ein zweites Stadium der Verarbeitung;
- Fig. 4: ein drittes Verarbeitungsstadium;
- Fig. 5: die Richtungsverteilung der in dem Verarbeitungsstadium der Fig. 4 extrahierten Routenabschnitte;
- Fig. 6: eine Darstellung auf einem Anzeigeschirm des Fahrzeugs, anhand derer ein Benutzer aus automatisch extrahierten Routenabschnitten eine Referenzfahrspur auswählen kann;
- Fig. 7: ein Anzeigebild, das einem Benutzer ermöglicht, einen ausgewählten Routenabschnitt zu editieren;
- Fig. 8: eine Darstellung des Anzeigeschirms des Fahrzeugs, in der eine anhand ausgewählter Referenzfahrspuren festgelegte geplante Fahrspur zu sehen ist;
- Fig. 9: ein Beispiel für ein Stück eines gefahrenen Wegs, eine von dem gefahrenen Weg abgeleitete Referenzfahrspur und eine basierend auf der Referenzfahrspur geplante weitere Fahrspur; und
- Fig. 10: Beispiele für die Ermittlung der Richtungsänderung des gefahrenen Weges.

Das erfindungsgemäße Verfahren ist anwendbar auf einem beliebigen landwirtschaftlichen Fahrzeug zur Bearbeitung einer landwirtschaftlichen Fläche, wie etwa einer Zugmaschine, einem Feldhäcksler, einem Mähdrescher oder dergleichen, das mit einem System zur automatischen Positionsbestimmung wie etwa einem GPS-Empfänger ausgestattet ist. Der GPS-Empfänger ermittelt regelmäßig die Position des Fahrzeugs und übermittelt diese an einen Computer. Der Computer ist vorzugsweise ein Bordcomputer des Fahrzeugs, doch ist das Verfahren auch auf einem stationären Computer ausführbar, an den die Ortsinformationen des GPS-Empfängers fortlaufend, vorzugsweise per Funk, übertragen werden.

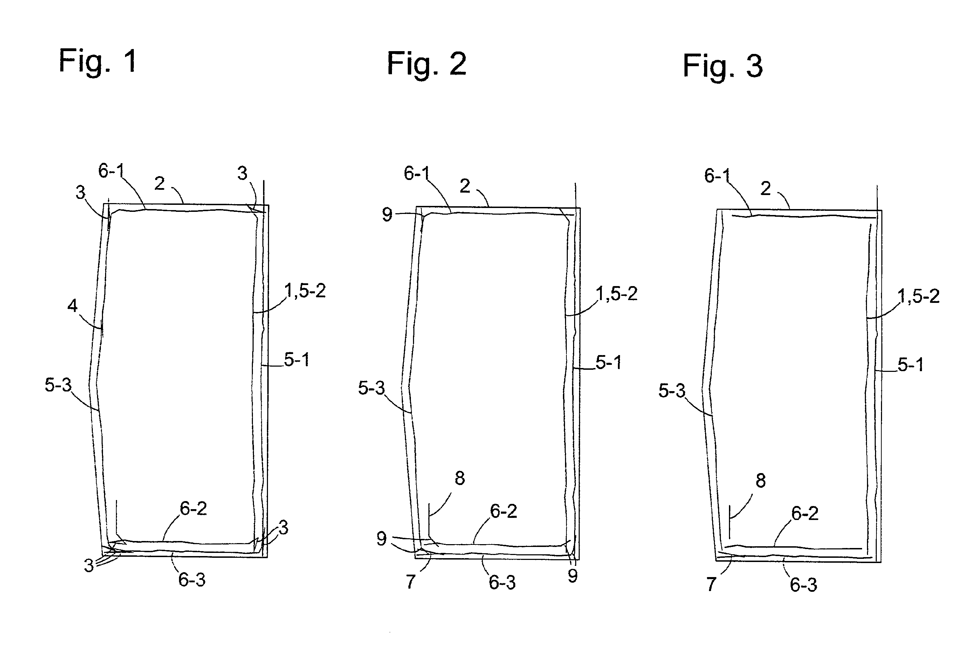

Der Computer rekonstruiert anhand der in zeitlicher Abfolge erhaltenen Ortsinformationen den vom Fahrzeug zurückgelegten Weg. Die von dem Fahrzeug gefahrene Ausgangsroute 1 ist in Fig. 1 allein der übersichtlicheren Darstellung wegen zusammen mit dem Umriss eines von dem Fahrzeug zu bearbeitenden Feldes 2 dargestellt. Der Computer benötigt a priori keinerlei Informationen über die Gestalt der von dem Fahrzeug zu bearbeitenden Fläche.

Wie in Fig. 1 zu erkennen, ist das Fahrzeug zunächst einmal am Rand des Feldes 2 entlang gefahren um Vorgewendeflächen freizulegen.

Auch wenn die Ränder des Feldes 2 geradling sind, gelingt es in der Regel nicht, einen exakt geraden, zum benachbarten Rand parallelen Weg zu fahren, denn auch bei einem geübten Fahrer muss das Fahrzeug sich zunächst ein Stück weit dem Rand nähern oder sich von ihm entfernen, bevor der Fahrer erkennen kann, dass der Abstand des Fahrzeugs zum Feldrand der Korrektur bedarf, und gegenlenken kann. Auch ein Hin- und Herschaukeln des Fahrzeugs aufgrund von Bodenunebenheiten kann dazu führen, dass der erfasste Weg des Fahrzeugs nicht exakt geradlinig verläuft, weil ein Referenzpunkt des Fahrzeugs, in Bezug auf den die Fahrzeugposition bestimmt wird, auch bei exakter Geradeausfahrt durch ein Schwanken des Fahrzeugs zur Seite ausgelenkt werden kann.

Es gibt Abschnitte der Ausgangsroute 1, in denen das Fahrzeug rückwärts fährt, so etwa Abschnitte 3 an den Feldecken, die daraus resultieren, dass das Fahrzeug, um die Feldfläche vollständig zu bearbeiten, zunächst tief in die Ecke hinein fährt und anschließend zurücksetzen muss, um eine Kurve fahren zu können. Aber auch beim Fahren entlang der Feldränder können rückwärts gefahrene Abschnitte 4 auftreten, zum Beispiel wenn der Fahrer bei der Feldbearbeitung auf ein Hindernis stößt und zurücksetzen muss, um es beiseite räumen zu können, damit es nicht von einem Bearbeitungswerkzeug des Fahrzeugs erfasst wird. Es wird davon ausgegangen, dass rückwärts gefahrene Strecken generell nicht als Referenzfahrspuren in Betracht kommen. Sie können daher aus der aufgezeichneten Ausgangsroute 1 gelöscht werden. So zerfällt die Ausgangsroute 1, wie in Fig. 2 dargestellt, in eine Mehrzahl von getrennten Abschnitten 5-1, 5-2, 5-3, 6-1, 6-2, 6-3, die jeweils an einem Rand des Feldes 2 entlang von einer Ecke zur anderen verlaufen, sowie eventuell kurze Fragmente 7, 8 an den Ecken.

Im Falle des Abschnitts 4, bei dem der Weg des Fahrzeugs unmittelbar vor und nach dem Zurücksetzen im Wesentlichen deckungsgleich ist, werden die Wegabschnitte vor und nach dem Zurücksetzen nach dem Löschen des Abschnitts 4 als ein zusammenhängender Abschnitt 5-3 behandelt.

Für die verbleibenden Abschnitte der Ausgangsroute 1 wird über deren gesamte Länge hinweg die Richtungsänderung berechnet und mit einem Grenzwert verglichen. Wegstücke 9, in denen die Richtungsänderung den Grenzwert überschreitet, wie insbesondere die stark gekrümmten Enden der in Fig. 2 gezeigten Abschnitte 5-1, 5-2, 5-3, 6-1, 6-2, 6-3, 7, 8, kommen voraussichtlich als Referenzfahrspuren nicht in Frage. Um diese stark gekrümmten Enden verkürzte Abschnitte 5-1, 5-2, 5-3, 6-1, 6-2, 6-3, 7, 8 sind in Fig. 3 dargestellt.

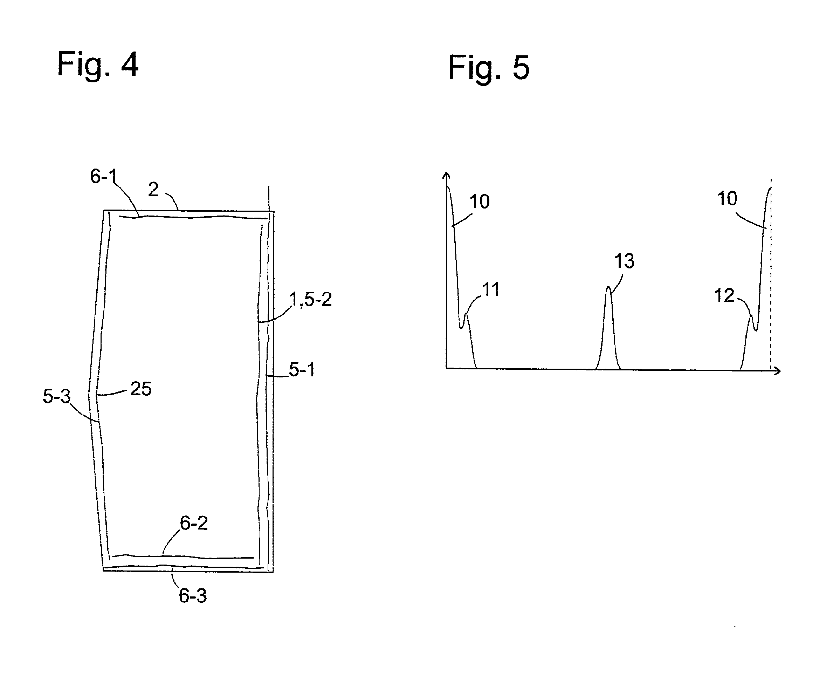

Der Computer berechnet die Länge der verbleibenden Routenabschnitte 5-1, 5-2, 5-3, 6-1, 6-2, 6-3, 7, 8 und vergleicht sie mit einem Grenzwert. Der Grenzwert kann fest vorgegeben oder von den Abmessungen des Feldes 2 abhängig sein. Insbesondere kann als Grenzwert ein vorgegebener Bruchteil der Länge des Längsten unter den Abschnitten 5-1, ... 6-3, 7, 8 angenommen werden. Die Länge der Fragmente 7, 8 liegt unter dem Grenzwert, so dass als mögliche Referenzspuren in Fig. 4 nur die Abschnitte 5-1, ... 6-3 übrig bleiben.

In einem nächsten Schritt wird die Vorzugsrichtung dieser verbliebenen Abschnitte ermittelt. Fig. 5 zeigt qualitativ einen Graphen der Richtungsverteilung, wie er für die Routenabschnitte der Fig. 4 erhalten werden könnte. Ein Maximum 10 bei 0° bzw. 180° geht auf die zwei Abschnitte 5-1, 5-2 zurück, die am geraden rechten Feldrand entlanglaufen. Zwei kleinere Nebenmaxima 11, 12 entsprechen dem Abschnitt 5-3, der am linken Feldrand entlangläuft und wie dieser leicht geknickt ist. Ein weiteres Maximum 13 bei 90° geht zurück auf die an den Schmalseiten des Feldes 2 entlanglaufenden Abschnitte 6-1, ... 6-3. Der Computer identifiziert das höchste Maximum bei 0 ° als die Vorzugsrichtung des Feldes 2. Somit kommen nur noch die in Längsrichtung verlaufenden Abschnitte 5-1, ... 5-3 als Referenzfahrspuren in Betracht.

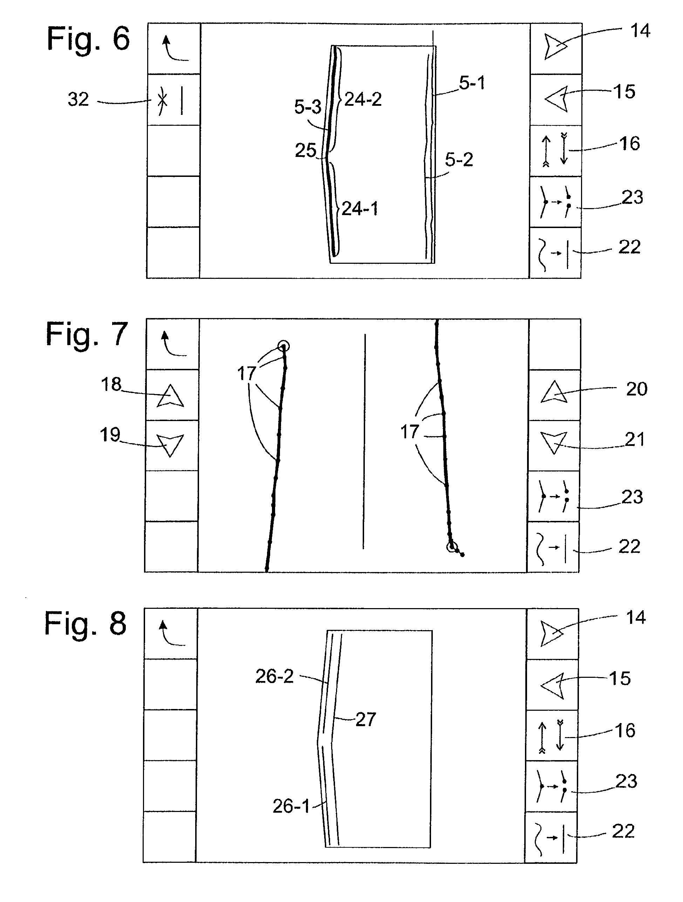

Diese werden einem Benutzer des Computers, vorzugsweise also dem Fahrer des Fahrzeugs, zur Auswahl und Editierung angeboten. Hierzu verfügt das Fahrzeug über einen berührungsempfindlichen Anzeigeschirm oder Touchscreen, auf dem, wie in Fig. 6 dargestellt, in einem zentralen Feld die als Referenzfahrspuren in Frage kommenden Routenabschnitte 5-1, 5-2, 5-3 kartenmäßig dargestellt werden. Wie bereits oben angeführt, sind Daten zur Gestalt des Feldes 2 für das Verfahren nicht erforderlich; wenn sie vorliegen, kann jedoch vorgesehen werden, dass der Umriss des Feldes 2 zusammen mit den vom Computer vorausgewählten Routenabschnitten 5-1, 5-2, 5-3 auf dem Anzeigeschirm dargestellt wird.

Der Benutzer kann unter den angezeigten Routenabschnitten 5-1, ... 5-3 einen auswählen, indem er mit dem Finger auf dessen Darstellung auf dem Bildschirm tippt, oder indem er durch Antippen von neben dem zentralen Feld am Bildschirmrand dargestellten Auswahlsymbolen 14, 15 die dargestellten Routenabschnitte einen nach dem anderen aktiviert. Ein vom Benutzer aktuell aktivierter Routenabschnitt, hier der Abschnitt 5-3, ist auf dem Anzeigeschirm hervorgehoben, zum Beispiel durch fette Darstellung.

Als weiteres Hilfsmittel zum Auswählen eines Routenabschnitts unter den angezeigten Abschnitten 5-1, ..., 5-3 kann dem Fahrer eine Taste 32 zur Verfügung gestellt werden, durch die er den Computer anweisen kann, den Abschnitt mit der stärksten Richtungsänderung auszuwählen und von der weiteren Verarbeitung auszuschließen. Unter den in Fig. 6 dargestellten Abschnitten hat der Abschnitt 5-3 die stärkste Richtungsänderung, und falls diese Richtungsänderung auf ungenaues Fahren zurückzuführen wäre, wäre es zweckmäßig, den Abschnitt 5-3 von der Auswahl als Referenzfahrspur auszuschließen. Im hier angenommenen Fall ist die Richtungsänderung des Abschnitts 5-3 jedoch auf den nicht geradlinigen Verlauf des Feldrandes zurückzuführen, und im Wissen darum wird der Fahrer die Taste 32 nicht benutzen.

Nach dem Aktivieren eines Routenabschnitts hat der Benutzer die Möglichkeit, durch Antippen eines Auswahlsymbols 16 den aktivierten Routenabschnitt als eine Referenzfahrspur auszuwählen und gleichzeitig in einen Editiermodus zu wechseln, von dem ein typisches Anzeigebild in Fig. 7 dargestellt ist. Auf dem nun zweigeteilten zentralen Feld des Anzeigeschirms sind in vergrößertem Maßstab Anfang und Ende des ausgewählten Routenabschnitts 5-3 dargestellt. Mit Hilfe des GPS-Epmfängers aufgezeichnete Koordinatenpunkte 17 des Routenabschnitts 5-3 sind hervorgehoben, hier in Form von kleinen schwarzen Kreisen. Ein Wegstück zu Beginn des Abschnitts 5-3, auf dem der tatsächlich gefahrene Weg aufgrund des zuvor gefahrenen Wendemanövers noch nicht mit der gewünschten Genauigkeit mit einem vom Fahrer eigentlich beabsichtigten geraden Weg übereinstimmt, ist in der vergrößerten Darstellung gut erkennbar, und der Fahrer kann mit Hilfe von Cursortasten 18, 19 einstellen, an welchem der diversen während des Fahrens der Ausgangsroute 1 aufgezeichneten Koordinatenpunkte 17 der Abschnitt 5-3 tatsächlich beginnen soll. Der momentan als Anfangspunkt der Referenzfahrspur ausgewählte Koordinatenpunkt 17 ist in der Darstellung der Fig. 7 kenntlich gemacht durch einen ihn umgebenden Kreis und durch die Tatsache, dass die Referenzfahrspur als eine fette Line und daran angrenzende Teile der Ausgangsroute 1 als magere Linien dargestellt sind. Entsprechende Cursortasten 20, 21 zum Verschieben des Endpunkts des Routenabschnitts 5-3 sind am entgegengesetzten Bildschirmrand, benachbart zur Darstellung des Endes des Routenabschnitts 5-3, angezeigt.

In der Praxis liegen die Koordinatenpunkte 17, aus denen sich der Abschnitt 5-3 zusammensetzt, niemals exakt auf einer geraden Linie. Auch bei einem in idealer Weise geradeaus gelenkten Fahrzeug haben die aufgenommenen Koordinatenpunkte einen zufälligen Seitwärtsversatz relativ zur Fahrtrichtung. Derartige zufällige Seitwärtsversätze sind in einer Referenzfahrspur nicht erwünscht, da sie beim Abfahren einer basierend auf einer solchen Referenzfahrspur geplanten Fahrspur ständige Lenkungskorrekturen erforderlich machen würden. Um dies zu vermeiden, ist es zweckmäßig, Seitwärtsversätze in den beim Fahren der Ausgangsroute 1 aufgenommenen Koordinatenpunkten zu reduzieren, indem für die sukzessive aufgezeichneten Koordinatenpunkte 17 jeweils deren Seitwärtsversatz in Bezug auf die aktuelle Fahrtrichtung berechnet und zufällige Störeinflüsse auf den Seitwärtsversatz durch eine Tiefpassfilterung unterdrückt oder zumindest reduziert werden. Denkbar ist auch, den ausgewählten Routenabschnitt 5-3 zu begradigen, indem der Benutzer einzelne unter den Koordinatenpunkten 17 des Routenabschnitts auswählt und der Computer den aufgezeichneten Polygonzug zwischen den ausgewählten Koordinatenpunkten 17 durch eine Gerade zwischen den ausgewählten Punkten ersetzt, oder dass der Computer, beispielsweise nach dem bekannten Verfahren der kleinsten Fehlerquadrate, eine Ausgleichsgerade durch die Koordinatenpunkte 17 des als Referenzfahrspur ausgewählten Abschnitts 5-3 berechnet. Eine solche Begradigung kann der Benutzer zum Beispiel durch Betätigen einer entsprechenden Taste 22 am Anzeigeschirm auslösen.

Während eine solche Begradigung ohne weiteres zweckmäßig ist, wenn einer der am geradlinigen rechten Rand des Feldes 2 entlang verlaufenden Abschnitte 5-1, 5-2 als Referenzfahrspur ausgewählt ist, ist sie im Falle des Abschnitts 5-3 problematisch, da der linke Feldrand, an dem der Abschnitt 5-3 entlangläuft, selber nicht geradlinig ist. Wenn nämlich die Seitwärtsabweichung zwischen tatsächlich gefahrenem Weg und begradigtem Weg größer als die Arbeitsbreite des Fahrzeugs ist, dann würde die Verwendung des begradigten Weges anstelle des tatsächlich gefahrenen Routenabschnitts 5-3 als Referenzfahrspur dazu führen, dass Teile der Feldfläche doppelt oder gar nicht bearbeitet werden. Um dieses Problem zu vermeiden, kann eine Taste 23 vorgesehen werden, die es dem Benutzer ermöglicht, den Abschnitt 5-3 in zwei Unterabschnitte 24-1, 24-2 (siehe Fig. 7) zu zerlegen. Die Festlegung der Grenze zwischen den zwei Unterabschnitten 24-1, 24-2 kann rein manuell erfolgen, indem der Fahrer mit Hilfe von Cursortasten einen der Koordinatenpunkte 17 auswählt, an dem die Unterteilung erfolgen soll; vorzugsweise kann sie durch den Computer unterstützt werden, der denjenigen Koordinatenpunkt 25 auf dem Abschnitt 5-3 berechnet, an dem dieser die stärkste Richtungsänderung aufweist (siehe Fig. 6), und diesen Punkt 25 als Grenze zwischen den zwei Teilen vorschlägt.

Die so aus dem Abschnitt 5-3 erhaltenen Abschnitte 24-1, 24-2 verlaufen jeweils an einem geraden Stück Feldrand entlang und können daher zweckmäßig geglättet oder durch eine Ausgleichsgerade ersetzt werden. Eine genaue Festlegung von Anfang und Ende der zwei so erhaltenen Abschnitte kann wieder in dem in Fig. 7 dargestellten Anzeigemodus erfolgen.

Eine noch weitergehende Vereinfachung kann darin bestehen, dass der Computer, bevor er auf einen Befehl des Benutzers zum Begradigen eines ausgewählten Routenabschnitts reagiert, die auf diesem Routenabschnitt auftretenden Seitwärtsabweichungen mit der Arbeitsbreite des Fahrzeugs vergleicht und vorschlägt, den Abschnitt in mehrere einzeln zu begradigende Teilabschnitte zu zerlegen, wenn die maximale Seitwärtsabweichung einen vorgegebenen Bruchteil der Arbeitsbreite übersteigt.

Als Ergebnis der Begradigung werden, wie in Fig. 8 gezeigt, aus den Abschnitten 24-1, 24-2 zwei geradlinige Referenzfahrspuren 26-1, 26-2 erhalten, und eine anhand dieser Referenzfahrspuren parallel zu diesen geplante Fahrspur 27 weist entsprechend dem Verlauf des linken Feldrandes einen Knick auf.

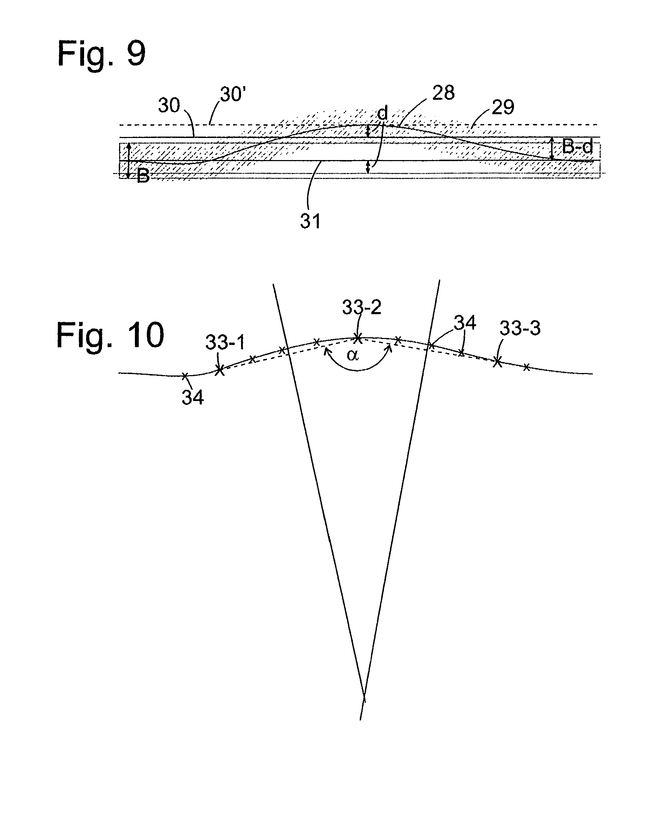

Fig. 9 verdeutlicht, wie anhand einer begradigten Referenzfahrspur in der Folge abzufahrende Fahrspuren geplant werden. Ein Abschnitt des tatsächlich vom Fahrzeug gefahrenen Weges ist mit 28 bezeichnet, beiderseits des Weges 28 erstreckt sich eine schraffierte Fläche 29, die von dem Fahrzeug beim Abfahren des Weges 28 bearbeitet wurde. Die bearbeitete Fläche 29 ist hier zwar auf beiden Seiten des Weges 28 gleich breit dargestellt, doch ist dies keine Bedingung. Wenn das Fahrzeug ein asymmetrisches Bearbeitungswerkzeug verwendet oder der Bezugspunkt am Fahrzeug, auf den der Weg 28 bezogen ist, außerhalb der Mittelebene des Fahrzeugs liegt, können sich unterschiedliche Breiten der Fläche 29 beiderseits des Weges 28 ergeben.

Eine durch Begradigen des gefahrenen Weges 28 erhaltene Referenzfahrspur ist mit 30 bezeichnet. Wenn eine nächste vom Fahrzeug abzufahrende Spur 31 parallel zur Referenzfahrspur 30 verlaufen soll, dann muss ihr Abstand vom gefahrenen Weg 28 kleiner als die Arbeitsbreite B des Fahrzeugs sein, um die Abweichungen zwischen dem Weg 28 und der Referenzfahrspur 30 zu berücksichtigen und eine lückenlose Flächenbearbeitung zu gewährleisten. Die maximale Abweichung, um die der Weg 28 zur von der zu planenden Fahrspur 31 abgewandten Seite von der Referenzfahrspur 30 abweicht, ist mit d bezeichnet. Als neue Fahrspur 31 wird daher eine zur Referenzfahrspur 30 parallele Spur geplant, deren Abstand von der Referenzfahrspur 30 um d kleiner ist als die Arbeitsbreite B des Fahrzeugs.

Die Abweichung d kann unter Umständen größer sein als die Arbeitsbreite B, was zur Folge hat, dass der um d verminderte Abstand zwischen der Referenzfahrspur 30 und der der zu planenden Fahrspur 31 negativ wird. In einem solchen Fall wird die nächste abzufahrende Spur 31 an der von der noch zu bearbeitenden Fläche abgewandten Seite der Referenzfahrspur 30 geplant, und im Anschluss an die Spur 31 abzufahrende Spuren werden auf der der zu bearbeitenden Fläche zugewandten Seite der Spur 31 im Abstand B zu dieser geplant.

Während bei der oben beschriebenen Vorgehensweise die basierend auf der Referenzfahrspur 30 geplanten Fahrspuren alle untereinander den Abstand B haben und allein der Abstand zwischen der Referenzfahrspur 30 und der ersten geplanten Fahrspur 31 kleiner als B sein kann, kann alternativ auch die Referenzfahrspur so festgelegt werden, dass auch sie von der ersten geplanten Fahrspur 31 den Abstand B hat. Hierfür genügt es, die durch Begradigen des gefahrenen Weges 28 erhaltene Referenzfahrspur um den Abstand d zur von den zu planenden Fahrspuren abgewandten Seite zu verschieben, wodurch die in Fig. 9 mit 30' bezeichnete Referenzfahrspur erhalten wird.

Um die Richtungsänderung auf dem gefahrenen Weg 28 abzuschätzen, sind diverse Methoden denkbar. Eine Möglichkeit ist zum Beispiel, dass an Bord des Fahrzeugs zusammen mit den Ortsinformationen auch ein Lenkradeinschlag überwacht und an den Computer übermittelt wird, und dass der Computer einen Grenzwert der Richtungsänderung als überschritten ansieht, wenn über eine signifikante Wegstrecke von zum Beispiel mehreren Metern hinweg der Einschlagwinkel des Lenkrads einen vorgegebenen Grenzwert übersteigt.

Alternativ kann der Computer auch aus den übermittelten Ortsinformationen selbst Aufschluss über die Richtungsänderung des Weges 28 gewinnen. Wenn das Fahrzeug zum Beispiel jeweils nach Zurücklegen einer vorgegebenen Weglänge Ortsinformationen wie etwa in Fig. 10 fett dargestellte Koordinatenpunkte 33-1, 33-2, 33-3 an den Computer überträgt, so ist der am mittleren Koordinatenpunkt 33-2 aufgespannte Winkel α ein brauchbares Maß für die Richtungsänderung an diesem Punkt, und als Grenzwert der Richtungsänderung kann für den Winkel α eine maximal zulässige Abweichung von 180° vorgegeben sein. Alternativ kommt als Maß für die Richtungsänderung der Radius eines Kreisbogens in Betracht, der die Punkte 33-1, 33-2, 33-3 verbindet. Der Mittelpunkt dieses Kreisbogens ist der Schnittpunkt der zwei Mittelsenkrechten auf den Strecken (33-1, 33-2) und (33-2, 33-3). Je kleiner dieser Radius ist, umso größer ist die Richtungsänderung.

Es kann auch zweckmäßig sein, mehr als drei Koordinatenpunkte für eine Abschätzung der Richtungsänderung heranzuziehen. So können, wenn zwischen den Punkten 33-1, 33-2, 33-3 weitere Koordinatenpunkte 34 erfasst werden, gegebenenfalls auch heftige Lenkmanöver auf kurzer Strecke erfasst werden, die mit einem groben Raster von Koordinatenpunkten unerkannt bleiben. Da mit zunehmender Dichte der Koordinatenpunkte die von drei aufeinander folgenden Koordinatenpunkten aufgespannten Winkel gegen 180° konvergieren bzw. die Berechnung des Radius eines die drei Punkte verbindenden Kreisbogens immer unsicherer wird, kann es zweckmäßig sein, die Winkel zwischen nicht unmittelbar aneinander grenzenden Strecken zu ermitteln, wie zum Beispiel zwischen denen, die jeweils in Fig. 10 die Punkte 33-1, 33-2 mit einem Nachbarpunkt 34 verbinden.

### Bezugszeichen

- 1: Ausgangsroute
- 2: Feld
- 3-6: Abschnitt
- 7, 8: Fragment
- 9: Wegstück
- 10-13: Maximum
- 14-16: Auswahlsymbol
- 17: Koordinatenpunkt
- 18-21: Cursortaste
- 22, 23: Taste
- 24: Unterabschnitt
- 25: Koordinatenpunkt
- 26: Referenzfahrspur
- 27: Fahrspur
- 28: Abschnitt
- 29: Fläche
- 30: Referenzfahrspur
- 31: Fahrspur
- 32: Taste

## Patentansprüche

1. Verfahren zur Erzeugung einer oder mehrerer Referenzfahrspuren (26, 30) für die automatische Routenplanung eines landwirtschaftlichen Fahrzeugs mit den Schritten:
a) Abfahren einer Ausgangsroute (1) auf einer zu bearbeitenden landwirtschaftlichen Fläche (2);
b) Aufzeichnen der Ausgangsroute (1) in einer Datenverarbeitungseinrichtung;
c) Auswählen wenigstens eines Abschnitts (5-1, 5-2, 5-3, 6-1, 6-2, 6-3, 7, 8) der aufgezeichneten Ausgangsroute (1) als eine Referenzfahrspur;
**dadurch gekennzeichnet, dass**
die Ausgangsroute (1) auf ihrer gesamten Länge auf Richtungsänderungen untersucht wird und in Schritt c) ein Abschnitt (5-1, 5-2, 5-3, 6-1, 6-2, 6-3) nur dann als Referenzfahrspur ausgewählt wird, wenn auf der gesamten Länge des Abschnitts (5-1, 5-2, 5-3, 6-1, 6-2, 6-3) keine einen Grenzwert überschreitende Richtungsänderung gefunden wird.

2. Verfahren nach Anspruch 1, **dadurch gekennzeichnet, dass** Schritt c) die Teilschritte c1) Vorauswählen einer oder mehrerer Referenzfahrspuren (5-1, 5-2, 5-3) und c2) Anbieten der vorausgewählten Referenzfahrspuren (5-1, 5-2, 5-3) zur endgültigen Auswahl durch einen Benutzer umfasst.

3. Verfahren nach Anspruch 2, **dadurch gekennzeichnet, dass** die vorausgewählten Referenzfahrspuren (5-1, 5-2, 5-3) dem Benutzer auf einem Bildschirm angezeigt werden.

4. Verfahren nach Anspruch 2 oder 3, **dadurch gekennzeichnet, dass** einem Benutzer die Möglichkeit angeboten wird, eine vorausgewählte Referenzfahrspur (5-3) zu kürzen oder zu verlängern.

5. Verfahren nach Anspruch 1, **dadurch gekennzeichnet, dass** in Schritt c) mehrere Abschnitte (5-1, 5-2, 5-3, 6-1, 6-2, 6-3, 7, 8) der aufgezeichneten Ausgangsroute (1) ausgewählt und ihre Qualität anhand wenigstens eines Kriteriums bewertet wird, und dass als Referenzfahrspur der Abschnitt mit der höchsten Qualität ausgewählt wird.

6. Verfahren nach einem der vorhergehenden Ansprüche, **dadurch gekennzeichnet, dass** in Schritt c) unter mehreren miteinander überlappenden Abschnitten, die auf ihrer gesamten Länge frei von den Grenzwert überschreitenden Richtungsänderungen sind, nur der längste als Referenzfahrspur ausgewählt wird.

7. Verfahren nach einem der vorhergehenden Ansprüche, **dadurch gekennzeichnet, dass** die Geschwindigkeit der Arbeitsmaschine beim Abfahren der Ausgangsroute erfasst wird und in Schritt c) nur solche Abschnitte der Ausgangsroute als Referenzfahrspur ausgewählt werden, auf denen eine Mindestgeschwindigkeit nicht unterschritten wurde.

8. Verfahren nach einem der vorhergehenden Ansprüche, **dadurch gekennzeichnet, dass** in Schritt c) unter mehreren Abschnitten, die auf ihrer gesamten Länge frei von den Grenzwert überschreitenden Richtungsänderungen sind, wenigstens einer, der die stärkste Richtungsänderung aufweist, verworfen wird.

9. Verfahren nach einem der vorhergehenden Ansprüche, **dadurch gekennzeichnet, dass** in Schritt c) unter mehreren Abschnitten (5-1, 5-2, 5-3, 6-1, 6-2, 6-3), die auf ihrer gesamten Länge frei von den Grenzwert überschreitenden Richtungsänderungen sind, eine Vorzugsrichtung ermittelt wird und dass wenigstens einer der Abschnitte (6-1, 6-2, 6-3), dessen Richtung am stärksten von der Vorzugsrichtung abweicht, verworfen wird.

10. Verfahren nach einem der vorhergehenden Ansprüche, **dadurch gekennzeichnet, dass** in Schritt c) unter mehreren Abschnitten (5-1, 5-2, 5-3, 6-1, 6-2, 6-3, 7, 8), die auf ihrer gesamten Länge frei von den Grenzwert überschreitenden Richtungsänderungen sind, jeder Abschnitt (7, 8) verworfen wird, dessen Länge eine vorgegebene Mindestlänge unterschreitet.

11. Verfahren nach einem der vorhergehenden Ansprüche, **dadurch gekennzeichnet, dass** in der aufgezeichneten Ausgangsroute (1) rückwärts gefahrene Abschnitte (3, 4) ausgeblendet werden.

12. Verfahren nach einem der vorhergehenden Ansprüche, **gekennzeichnet durch** den Schritt des Glättens eines in Schritt c) ausgewählten Abschnitts (28).

13. Verfahren nach Anspruch 12, **dadurch gekennzeichnet, dass** der Schritt des Glättens auf Veranlassung (22) eines Benutzers ausgeführt wird.

14. Verfahren nach Anspruch 12 oder 13, **dadurch gekennzeichnet, dass** ein Querversatz (d) zwischen dem ausgewählten Abschnitt (28) vor dem Glätten und der Referenzfahrspur ermittelt (30) wird und eine zu der Referenzfahrspur (30) parallele Spur (31) in einem Abstand (B-d) von der Referenzfahrspur (30) geplant wird, der der Arbeitsbreite (B) des Fahrzeugs, korrigiert um den Querversatz (d), entspricht.

15. Verfahren nach einem der vorhergehenden Ansprüche, **dadurch gekennzeichnet, dass** die Ausgangsroute (1) einen Teil der zu bearbeitenden landwirtschaftlichen Fläche (2) abdeckt, und dass eine ausgewählte Referenzfahrspur (26-1, 26-2; 30) zur Planung einer Route (27; 31) auf dem von der Ausgangsroute (1) nicht abgedeckten Teil der Fläche (2) herangezogen wird.

16. Verfahren nach einem der vorhergehenden Ansprüche, **dadurch gekennzeichnet, dass** als Maß für eine Richtungsänderung wenigstens eine der folgenden Größen verwendet wird:
- ein von drei aufeinanderfolgenden Punkten der Route (1) aufgespannter Winkel;
- ein lokaler Krümmungsradius der Route (1) ;
- ein Lenkwinkel des Fahrzeugs.

## Claims

1. A method of producing one or more reference travel paths (26, 30) for automatic route planning of an agricultural vehicle comprising the steps:
a) driving along a starting route (1) on an agricultural area (2) to be worked;
b) recording the starting route (1) in a data processing apparatus;
c) selecting at least one portion (5-1, 5-2, 5-3, 6-1, 6-2, 6-3, 7, 8) of the recorded starting route (1) as a reference travel path;
**characterised in that**
the starting route (1) is investigated for changes in direction over its entire length and in step c) a portion (5-1, 5-2, 5-3, 6-1, 6-2, 6-3) is selected as a reference travel path only when no change in direction exceeding a limit value is found over the entire length of the portion (5-1, 5-2, 5-3, 6-1, 6-2, 6-3).

2. A method according to claim 1 **characterised in that** step c) includes the partial steps
c1) preselecting one or more reference travel paths (5-1, 5-2, 5-3) and
c2) offering the preselected reference travel paths (5-1, 5-2, 5-3) for definitive selection by a user.

3. A method according to claim 2 **characterised in that** the preselected reference travel paths (5-1, 5-2, 5-3) are displayed to the user on a screen.

4. A method according to claim 2 or claim 3 **characterised in that** a user is offered the option of reducing or increasing the length of a preselected reference travel path (5-3).

5. A method according to claim 1 **characterised in that** in step c) a plurality of portions (5-1, 5-2, 5-3, 6-1, 6-2, 6-3, 7, 8) of the recorded starting route (1) are selected and their quality is evaluated on the basis of at least one criterion and the portion of the highest quality is selected as the reference travel path.

6. A method according to one of the preceding claims **characterised in that** in step c) among a plurality of mutually overlapping portions which over their entire length are free from changes in direction exceeding the limit value, only the longest one is selected as the reference travel path.

7. A method according to one of the preceding claims **characterised in that** the speed of the working machine when travelling along the starting route is detected and in step c) only those portions of the starting route are selected as the reference travel path, on which the speed did not fall below a minimum speed.

8. A method according to one of the preceding claims **characterised in that** in step c) among a plurality of portions which over their entire length are free from changes in direction exceeding the limit value, at least one which has the greatest change in direction is discarded.

9. A method according to one of the preceding claims **characterised in that** in step c) among a plurality of portions (5-1, 5-2, 5-3, 6-1, 6-2, 6-3) which over their entire length are free from changes in direction exceeding the limit value a preferential direction is ascertained and at least one of the portions (6-1, 6-2, 6-3) whose direction deviates most greatly from the preferential direction is discarded.

10. A method according to one of the preceding claims **characterised in that** in step c) among a plurality of portions (5-1, 5-2, 5-3, 6-1, 6-2, 6-3, 7, 8) which over their entire length are free from changes in direction exceeding the limit value that portion (7, 8) whose length is less than a predetermined minimum length is discarded.

11. A method according to one of the preceding claims **characterised in that** portions (3, 4) negotiated rearwardly are excluded in the recorded starting route (1).

12. A method according to one of the preceding claims **characterised by** the step of smoothing a portion (28) selected in step c).

13. A method according to claim 12 **characterised in that** the smoothing step is performed at the instigation (22) of a user.

14. A method according to claim 12 or claim 13 **characterised in that** a transverse displacement (d) between the selected portion (28) prior to the smoothing operation and the reference travel path is ascertained (30) and a path (31) parallel to the reference travel path (30) is planned at a spacing (B-d) from the reference travel path (30), which corresponds to the working width (B) of the vehicle, corrected by the transverse displacement (d).

15. A method according to one of the preceding claims **characterised in that** the starting route (1) covers a part of the agricultural area (2) to be worked and a selected reference travel path (26-1, 26-2; 30) is used for planning a route (27; 31) on the part of the area (2), that is not covered by the starting route (1).

16. A method according to one of the preceding claims **characterised in that** at least one of the following parameters is used as a measure for a change in direction:
- an angle defined by three successive points on the route (1);
- a local radius of curvature of the route (1); and
- a steering angle of the vehicle.

## Revendications

1. Procédé d'obtention d'une ou plusieurs traces de passage de référence (26, 30) pour la planification automatique d'itinéraire d'un véhicule agricole, comprenant les étapes consistant à :
a) parcourir un itinéraire de départ (1) sur une surface agricole à travailler (2) ;
b) enregistrer l'itinéraire de départ (1) dans un dispositif de traitement de données ;
c) sélectionner comme trace de passage de référence au moins une portion (5-1, 5-2, 5-3, 6-1, 6-2, 6-3, 7, 8) de l'itinéraire de départ enregistré (1) ;
**caractérisé en ce que**
des changements de direction sont recherchés sur la longueur totale de l'itinéraire de départ (1) et, à l'étape c), une portion (5-1, 5-2, 5-3, 6-1, 6-2, 6-3) n'est sélectionnée comme trace de passage de référence que si aucun changement de direction surpassant une valeur limite n'est trouvé sur la longueur totale de la portion (5-1, 5-2, 5-3, 6-1, 6-2, 6-3).

2. Procédé selon la revendication 1, **caractérisé en ce que** l'étape c) comprend les étapes partielles c1) présélection d'une ou plusieurs traces de passage de référence (5-1, 5-2, 5-3) et c2) proposition des traces de passage de référence présélectionnées (5-1, 5-2, 5-3) pour sélection définitive par un utilisateur.

3. Procédé selon la revendication 2, **caractérisé en ce que** les traces de passage de référence présélectionnées (5-1, 5-2, 5-3) sont montrées à l'utilisateur sur un écran.

4. Procédé selon la revendication 2 ou 3, **caractérisé en ce que** la possibilité est offerte à un utilisateur de raccourcir ou d'allonger une trace de passage de référence présélectionnée (5-3) .

5. Procédé selon la revendication 1, **caractérisé en ce qu'**à l'étape c) plusieurs portions (5-1, 5-2, 5-3, 6-1, 6-2, 6-3, 7, 8) de l'itinéraire de départ enregistré (1) sont sélectionnées et leur qualité est évaluée à l'aide d'au moins un critère, et **en ce que** la portion sélectionnée comme trace de passage de référence est celle présentant la meilleure qualité.

6. Procédé selon une des revendications précédentes, **caractérisé en ce qu'**à l'étape c), parmi plusieurs portions chevauchantes qui, sur leur longueur totale, sont exemptes de changements de direction surpassant la valeur limite, seule la plus longue est sélectionnée comme trace de passage de référence.

7. Procédé selon une des revendications précédentes, **caractérisé en ce que**, lors du parcours de l'itinéraire de départ, la vitesse de l'engin de travail est détectée et, à l'étape c), seules sont sélectionnées comme traces de passage de référence les portions sur lesquelles une vitesse minimale n'a pas été soupassée.

8. Procédé selon une des revendications précédentes, **caractérisé en ce qu'**à l'étape c), parmi plusieurs portions qui, sur leur longueur totale, sont exemptes de changements de direction surpassant la valeur limite, au moins celle présentant le changement de direction le plus marqué est rejetée.

9. Procédé selon une des revendications précédentes, **caractérisé en ce qu'**à l'étape c), parmi plusieurs portions (5-1, 5-2, 5-3, 6-1, 6-2, 6-3) qui, sur leur longueur totale, sont exemptes de changement de direction surpassant la valeur limite, une direction préférentielle est déterminée, et **en ce qu'**au moins celle des portions (6-1, 6-2, 6-3) dont la direction s'écarte le plus de la direction préférentielle est rejetée.

10. Procédé selon une des revendications précédentes, **caractérisé en ce qu'**à l'étape c), parmi plusieurs portions (5-1, 5-2, 5-3, 6-1, 6-2, 6-3, 7, 8) qui, sur leur longueur totale, sont exemptes de changements de direction surpassant la valeur limite, chaque portion (7, 8) dont la longueur soupasse une longueur minimale prescrite est rejetée.

11. Procédé selon une des revendications précédentes, **caractérisé en ce que**, sur l'itinéraire de départ enregistré (1), les portions parcourues en marche arrière (3, 4) sont occultées.

12. Procédé selon une des revendications précédentes, **caractérisé par** l'étape consistant à lisser une portion (28) sélectionnée à l'étape c).

13. Procédé selon la revendication 12, **caractérisé en ce que** l'étape de lissage est réalisée à l'initiative (22) d'un utilisateur.

14. Procédé selon la revendication 12 ou 13, **caractérisé en ce qu'**un déport transversal (d) entre la portion sélectionnée (28) avant le lissage et la trace de passage de référence (30) est déterminé (30), et une trace (31) parallèle à la trace de passage de référence (30) est planifiée à une distance (B-d) de la trace de passage de référence (30), laquelle correspond à la largeur de travail (B) du véhicule, corrigée du déport transversal (d).

15. Procédé selon une des revendications précédentes, **caractérisé en ce que** l'itinéraire de départ (1) couvre une partie de la surface agricole à travailler (2), et **en ce qu'**une trace de passage de référence sélectionnée (26-1, 26-2 ; 30) est utilisée pour planifier un itinéraire (27 ; 31) sur la partie de la surface (2) non couverte par l'itinéraire de départ (1).

16. Procédé selon une des revendications précédentes, **caractérisé en ce que** la mesure employée pour un changement de direction est au moins une des grandeurs suivantes :
- un angle formé par trois points successifs de l'itinéraire (1) ;
- un rayon de courbure local de l'itinéraire (1) ; ;
- un angle de braquage du véhicule.
